# EUROPÄISCHE PATENTSCHRIFT

(11) **EP 2 688 742 B1**
(45) Veröffentlichungstag und Bekanntmachung des Hinweises auf die Patenterteilung: **13.09.2017**
(21) Anmeldenummer: 12706509.2
(22) Anmeldetag: 14.02.2012
(51) Int. Cl.: B32B 3/22, A47G 5/00, C09J 7/02, B32B 7/12

(54) **VERWENDUNG EINER SCHRUMPFFOLIE AUS POLYMILCHSÄURE**
USE OF A SHRINK FILM MADE OF POLYLACTIC ACID
UTILISATION D'UN FILM RÉTRACTABLE COMPOSÉ D'ACIDE POLYLACTIQUE

(30) Priorität: 21.03.2011 DE 102011005874
(43) Veröffentlichungstag der Anmeldung: 29.01.2014
(73) Patentinhaber: tesa SE, 22848 Norderstedt (DE)
(72) Erfinder: VIRUS, Frank, 22303 Hamburg (DE); SCHUBERT, Thomas, 20251 Hamburg (DE)
(86) Internationale Anmeldenummer: PCT/EP2012/052499
(87) Internationale Veröffentlichungsnummer: WO 2012/126676

(56) Entgegenhaltungen:
- WO-A1-2008/082902
- WO-A2-2007/061944
- DE-A1- 3 603 518
- JP-A- 2006 030 668
- JP-A- 2008 062 590
- US-A- 5 937 596
- US-A- 5 937 596

## Beschreibung

Die Erfindung betrifft die Verwendung einer Schrumpffolie aus Polymilchsäure.

Zum Schutz vor Auskühlung eines Raums gegenüber einem kalten Außenbereich kann man versuchen, den Energieverlust durch die Fenster zu reduzieren. Dies kann durch Mehrfachverglasung gelöst werden, welche im Wesentlichen Konvektion der Luft unterdrückt und so den Energieverlust auf strahlende und leitende Prozesse reduziert. Alternativ dazu kann an der dem Raum zugewandten Seite ein solcher isolierender Luftspalt vor der Glasscheibe auch durch eine auf den Fensterrahmen gespannte und transparente Folie geschaffen werden. Die Fixierung auf dem Fensterrahmen kann dabei durch doppelseitige Haftklebebänder erfolgen, durch Rahmen-Konstruktionen oder ähnlichem. Für auf dem Fensterrahmen fixierte Folien wird meist ein optisch ansprechendes, glattes und gespanntes Erscheinungsbild durch Schrumpfen der Folie mit einem Haushaltsfön erreicht. Häufig verwendete Folien bestehen aus Polyolefinen wie Polyethylen, hierbei häufig als Blasfolie hergestellt. Diese Folien können mit einem Haushaltsfön sehr schnell und einfach durch Schrumpf gespannt werden, bieten allerdings nur bei sehr dünnen Folien im Bereich bis ungefähr 20 µm noch ausreichende optische Qualität. Der Stand der Technik hierzu ist gut in der US 7,815,997 B2 wiedergegeben.

Der Verlust von Wärme durch einen Fensterscheibenverbund hängt neben Effekten der Konvektion mit der Abstrahlung der Wärme von der Oberfläche der warmen (durch die Raumluft gewärmten) Fensterscheiben nach außen zusammen. Diese Wärmestrahlung, also die Strahlung die jedes warme Objekt abgibt, ist für typische Umgebungstemperaturen im fernen Infrarot (FIR) angesiedelt. Hingegen spielt der Verlust durch direkte Durchstrahlung von FIR-Wärmestrahlung aus dem Raum nach außen bei üblichen Glasfenstern keine Rolle, da sie meist vollständig absorbiert wird. Der Abstrahlverlust der warmen Fensterscheibe kann nun durch Beschichtungen mit niedriger Emission im FIR-Bereich reduziert werden, man spricht dann von niedriger Emissivität (engl. low emittivity oder *"low-e"*). Solche low-e-Beschichtungen sind optisch/visuell möglichst transparent gestaltet und werden heutzutage regelmäßig in modernen Fenstern eingesetzt. Mehrschichtaufbauten mit metallischen und oxidischen Schichten sind hierbei üblich.

Im Gegensatz zur bisher genannten Situation kann auch Schutz vor Überhitzung in Zimmern mit direkter Sonneneinstrahlung gewünscht sein. Hierbei wird grundsätzlich versucht, den solaren Energieeintrag in den Raum durch die Fenster zu reduzieren. Dies kann einerseits physisch-mechanisch erfolgen, wie zum Beispiel durch Lamellen oder Rollos. Andererseits existieren teil-transparente Beschichtungen, welche geeignet sind, Energie im sichtbaren und/oder infraroten (> 700 nm, nahes Infrarot, NIR) Spektrum zu reduzieren. Verschiedene Beschichtungen sind hierfür geeignet, ein einfaches Beispiel ist eine metallische Schicht mit einer Dicke von wenigen nm (beispielsweise um die 10 nm), bestehend zum Beispiel aus Silber oder Aluminium, oft kombiniert mit weiteren Haftvermittlerschichten oder Deckschichten.

Solche Beschichtungen zur Kontrolle von Überhitzung oder Auskühlung können ab Werk auf den Glasscheiben selbst erfolgen oder alternativ auf Folien aufgebracht werden. Ein Beispiel ist gegeben in US 4,335,166 A, welches lehrt wie eine solche Schrumpffolie in der Mitte von Mehrfachverglasungen eingesetzt werden kann. Typisch ist eine Nachrüstung auf Fensterscheiben durch eine schwimmende Verklebung der Folien (zum Beispiel beschrieben in US 4,095,013 A und US 4,157,417 A). EP0355962B1 lehrt eine metallisierte Schrumpffolie, welche zur Kontrolle von solarer Strahlung nachträglich am Fensterrahmen befestigt wird.

Neben der Kontrolle von solarer Energie und Wärmestrahlung, können Fensterfolien, dann meist schwimmend und klebend auf dem Glas verlegt, noch andere Funktionen erfüllen: es gibt Folien für Sichtschutz, Dekoration, Bruch-/Verletzungsschutz, Explosionsschutz, Blendschutz, Oberflächenschutz und weiteres.

Für den Fall einer am Fenster nachgerüsteten Schrumpffolie führt die benötigte leichte Schrumpfbarkeit mit einem Haushaltsfön in handelsüblichen Produkten fast ausschließlich zur Verwendung von Polyethylen (PE) oder verwandten Polyolefinen und Copolymeren. Jedoch hat PE einige wohlbekannte materialbedingte Einschränkungen, welche optisch und in der Handhabung negativ auffallen.
Die optischen Probleme von PE sind vor allem mangelhafte Transparenz und großer Haze, besonders bei Verwendung von PE aus Blasfolienherstellung. Der Haze-Wert beschreibt den Anteil des transmittierten Lichts, der von der durchstrahlten Probe nach vorne gestreut wird. Somit quantifiziert der Haze-Wert Materialfehler in der Oberfläche oder der Struktur, die die klare Durchsicht stören.
Diese optisch limitierte Qualität erzwingt auch die Verwendung sehr dünner PE-Folien, wodurch auch die Handhabung und der Zuschnitt des Produkts erschwert sind. Auch nach Anbringung und Spannen durch Schrumpf ist die Folie weich und nicht stabil gegen Verformung bei mechanischer Belastung. Der mechanische und optische Eindruck einer solchen Folie ist nicht hochwertig.
Zudem können durch die niedrige Oberflächenenergie der polyolefinischen Folien Probleme mit schlechter Verklebung am Fensterrahmen auftreten, z.B. unter Verwendung von doppelseitigen Haftklebebändern.
Wenn eine funktionelle Beschichtung der Schrumpffolie gewünscht wird, führt die niedrige Oberflächenenergie meist auch zu Problemen mit der Benetzung oder der Verankerung der Schicht. Auch eine Metallisierung durch Vakuum-Bedampfung oder Sputtern ist problematisch auf niederenergetischen Oberflächen. Wenn die Folie bei relativ niedrigen Temperaturen einen deutlichen Schrumpf aufweist kann die thermische Belastung beim Bedampfen ein Problem darstellen. Zudem ist die Rolle-zu-Rolle-Beschichtung einer dünnen und weichen PE aufgrund der schwierigen Bahnführung problematisch.

Die genannten Probleme am Beispiel von PE sind in unterschiedlicher Ausprägung bei verschiedenen polyolefinischen Folien anzutreffen. Hingegen scheint das anderweitig häufig verwendete Polyethylenterephthalat (PET) eine gute Lösung für die meisten dieser Schwierigkeiten. Es ist als verstreckte Folie optisch meist von hoher Qualität, ist dimensionsstabil und hat eine hohe Oberflächenenergie. Jedoch wird aus gutem Grund PET für eine solche Schrumpffolienanwendung am Fenster meist nicht verwendet, da zur Schrumpfung einer handelsüblichen verstreckten PET-Folie hohe Temperaturen nötig sind, welche typischerweise nicht mit einem Haushaltsfön aufgebracht werden können.

Selbst wenn durch sehr lange Einwirkung der Hitze eines Haushaltsföns ein Schrumpf erzielt werden kann, ist dies aber für die gedachte Anwendung einer schnellen und einfachen Montage im Haushalt nicht zumutbar.

Aufgabe der Erfindung ist es, eine Folie zu finden, die insbesondere vor einem Fenster eine thermisch isolierende Schicht erzeugt, wobei die Folie bessere Eigenschaften als die bekannten aufweist und wobei die Folie über viele Monate ausreichend stabil ist, so dass die Funktionalität nicht eingeschränkt ist.

Gelöst wird diese Aufgabe durch die Verwendung einer Schrumpffolie aus Polymilchsäure.

Demgemäß betrifft die Erfindung die Verwendung .einer Schrumpffolie aus Polymilchsäure zur Herstellung einer thermischen Isolierung, wobei die Schrumpffolie so vor einer Trennschicht aufgebracht ist, dass sich zwischen Trennschicht und Schrumpffolie eine thermisch isolierende Schicht befindet, wobei die Schrumpffolie auf einem Rahmen, der ein Fenster einfasst, aufgebracht wird.

Polymilchsäuren oder Polylactide (kurz PLA) sind Polyester auf Basis von Milchsäure, aus deren Lactid sie durch Ringöffnungspolymerisation hergestellt werden können. Polymilchsäuren sind thermoplastische Kunststoffe, die aus Milchsäuremolekülen aufgebaut sind. Lactide sind natürlichen Ursprungs und lassen sich durch Vergärung von Melasse oder durch Fermentation von Glucose mit Hilfe von verschiedenen Bakterien herstellen. Das Polymer als Polyhydroxycarbonsäure ist vollständig kompostierbar und biologisch abbaubar. Abbauprodukte sind Wasser und Kohlendioxid. Die thermische Stabilität und die mechanischen Eigenschaften lassen sich durch Compoundierung mit anderen Polymeren wie zum Beispiel Polyolefinen in weiten Bereichen verändern, wobei die Kompostierbarkeit und die biologische Abbaubarkeit mit zunehmenden Gehalt an nicht kompostierbar und biologisch abbaubaren Additiven reduziert wird.

Polymilchsäure wird als resorbierbares chirurgisches Nahtmaterial und als Verkapselungsmaterial für Pharmaka eingesetzt. Copolymere aus L-Milchsäure und ε-Caprolacton sind biologisch abbaubare orthopädische Reparaturmaterialien für zum Beispiel Knochenreparaturen.

Die Herstellung und Verwendung von Polymilchsäurefolien für den Bereich der Verpackung, des Landwirtschafts- und Gartenbaus und der Medizintechnik ist hinreichend bekannt.

In einer ersten vorteilhaften Ausführungsform ist die Schrumpffolie biobasiert, also hergestellt aus biologischen nachwachsenden Rohstoffen.
Des Weiteren ist die Schrumpffolie bioabbaubar, das heißt, sie kann unter industriellen Bedingungen kompostiert oder abgebaut werden; dies passiert nicht unter üblichen Haushaltsbedingungen an Luft. Eine Definition der Bioabbaubarkeit findet sich in der Europäischen Norm EN 13432 / EN 14995.

Das Trägermaterial besteht bevorzugt aus reiner Polymilchsäure, kann aber auch Polymilchsäure/Polyester-Compounds, beispielsweise vom Typ Ecovio® (BASF), aliphatisch-aromatische Copolyester, beispielsweise vom Typ Ecoflex® (BASF), Polyhydroxyalkanoaten (PHA), Polybutylenadipatterephthalat (PBAT), Polybutylensuccinat (PBS), Stärke und/oder Cellulose enthalten oder Compounds mit Polyolefinen oder Ölen.
Beide chirale PLA-Varianten L und D können in beliebigen Verhältnissen verwendet werden.

Erfindungsgemäß ist der Polymilchsäureanteil im Träger vorzugsweise größer oder gleich 30 Gew.-%, weiter vorzugsweise zwischen 50 und 100 Gew.-%, besonders bevorzugt zwischen 65 bis 99,9 Gew.-%, ganz besonders bevorzugt zwischen 80 und 99,9 Gew.-% und besonders besonders bevorzugt zwischen 90 und 99,9 Gew.-%.
Die hier genannten bevorzugten Anteile von Polymilchsäure gelten auch für aufgeführten Compounds.
Vorzugsweise wird die Polymilchsäure mit anderen verträglichen biologisch abbaubaren Polymeren compoundiert.

Weiter vorzugsweise werden der Schrumpffolie Weichmacher zugesetzt wie Polyethylenglycol (PEG), Polypropylenglycol, Glycolether (zum Beispiel der Adipinsäure), Polyvinylacetat, Polyethylenvinylacetat, Polyacrylat u.a. Der Anteil Weichmacher beträgt bezogen auf die Gesamtzusammensetzung der Folie zwischen 1 bis 15 Gew.-%.

Die Dicke der Schrumpffolie liegt vorzugsweise zwischen 5 bis 100 µm, weiter vorzugsweise zwischen 15 bis 30 µm.

Als Schrumpffolie wird jede Folie bezeichnet, die durch Wärmeeinwirkung in mindestens einer Dimension schrumpft. Besonders geeignet ist eine Folie, welche mit einem üblichen Haushaltsfön in zumutbarer Zeit geschrumpft werden kann. Die meisten handelsüblichen Haushaltsföne erreichen bei dauerhafter Einwirkung auf eine feste Oberfläche aus ca. 10 cm Entfernung eine Temperatur von ca. 75 bis 80 °C. Um die Schrumpfung einer Folie durch einen solchen Fön zu gewährleisten, muss für die in dieser Erfindung genannten Anwendungen ein ausreichender Schrumpf bei Temperaturen von 75 °C oder weniger eintreten. Zudem muss die Einwirkungszeit der Hitze zumutbar gering sein, sodass eine Schrumpffolie, welche über einem Fenster mit haushaltsüblicher Größe angebracht ist in wenigen Minuten durch Schrumpfen geglättet und gespannt werden kann.

Vorzugsweise ist die Schrumpffolie eine solche, dass sie einen Schrumpf von mindestens 1 % bei Behandlung mit einem Luftstrahl von 75 °C aufweist.

Vorzugsweise weist die Schrumpffolie eine Beschichtung mit niedriger Emissivität (*low-e*) auf, zum Beispiel aber nicht ausschließlich durch Metallisierung zur spektral selektiven Kontrolle von Strahlung im fernem Infrarot (> 2500 nm), beispielsweise aber nicht ausschließlich durch Metallisierung bestehend aus Silber, Kupfer, Aluminium, Eisen, Titan, Nickel, Zinn, nichtrostendem Stahl, Gold, Chrom oder Legierungen derselben. Weiter vorzugsweise weist die Schrumpffolie eine Beschichtung zur Beeinflussung von sichtbaren (< 700 nm) oder nahem infrarotem (> 700 nm) Licht auf, beispielsweise aber nicht ausschließlich durch Metallisierung bestehend aus Silber, Kupfer, Aluminium, Eisen, Titan, Nickel, Zinn, nichtrostendem Stahl, Gold, Chrom oder Legierungen derselben. Solche energiesteuernden Beschichtungen können alternativ auch aus leitenden Polymeren, oder leitenden oder halb-leitenden Oxiden bestehen.
Weiterhin kann die Beschichtung thermochrome, photochrome, elektrochrome oder vergleichbare schaltende oder schaltbare Eigenschaften aufweisen, oder geeignete absorbierende, reflektierende oder streuende Farbmittel oder Beschichtungen enthalten. Beispielsweise sei bezüglich der photochromen Zusätze auf die DE 10 2008 043 498 A1 verwiesen.

Weiter vorzugsweise wird die Schrumpffolie bei ihrer Herstellung mit solchen funktionellen Materialien abgemischt, anstatt diese in einer Beschichtung aufzubringen. Dadurch weist die Folie energiesteuernde Eigenschaften auf, vorzugsweise elektrochrome, photochrome und/oder thermochrome Eigenschaften, besonders vorzugweise energieabsorbierend oder -reflektierend.

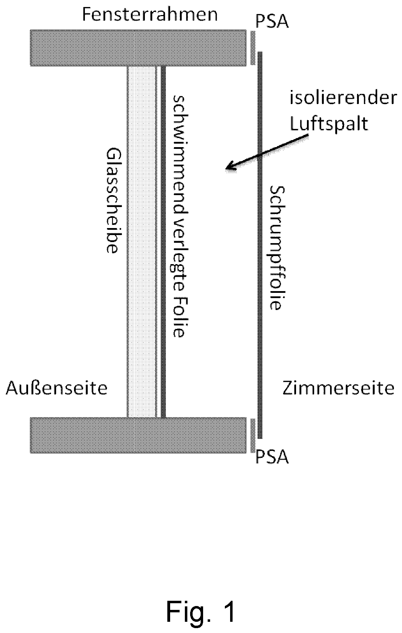

In der Figur 1 ist eine erfindungsgemäße Ausführungsform gezeigt, und zwar ist die Schrumpffolie auf einem Rahmen, der ein Fenster einfasst, aufgebracht. Weiter vorzugsweise ist die Schrumpffolie auf dem Rahmen, der ein Fenster einfasst, verklebt.

PLA-Folien können alternativ auf Grund ihrer mechanischen Stabilität auch vorteilhaft direkt auf der Trennschicht aufgebracht werden, und weiter vorzugsweise schwimmend. Dies ist ebenfalls in Figur 1 gezeigt. Eine schwimmende Verlegung beschreibt die Verlegung einer Folie auf Fensterglas durch Anfeuchten des Glases und/oder der Folie; dies erlaubt exakte Repositionierung; es kann, muss aber nicht, eine Klebmasseschicht auf der Folie vorhanden sein. Dadurch, dass PLA günstige mechanische und Schrumpf-Eigenschaften verbindet, ist eine solche alternative Anbringung bei Verwendung desselben Materials erst praktikabel.
Durch den Schrumpfvorgang können Falten und Blasen aus der Folie entfernt werden.

Als PLA-Folien können für die Zwecke dieser Erfindung sowohl Blasfolien als auch Streckfolien eingesetzt werden, bevorzugt ist jedoch der Einsatz von Streckfolien (monoaxial oder biaxial), da deren optischen Eigenschaften im Allgemeinen besser sind. Die vergleichsweise geringe Temperaturstabilität von PLA erleichtert den Einsatz solch hochwertiger verstreckter Folien als Schrumpffolie.

PLA-Folien haben weiterhin die vorteilhafte Eigenschaft, dass ihre recht hohe Permeabilität für Wasserdampf einen positiven Einfluss auf die Trocknung nach schwimmender Verlegung sowie auf das Entweichen von Kondensationswasser am kalten Fensterglas hat. Trotz guter Dampfpermeation hat PLA eine geringe Feuchtigkeitsaufnahme.

Die erfindungsgemäßen PLA-Folien haben typischerweise eine Transmission besser als 90 % und einen Haze geringer als 4 %. Eine beispielhafte PLA-Folie "Nativia NTSS" in 25 µm Dicke von Taghleef, biaxial verstreckt, hat einen gemessenen Haze von 2,8 % (nach ASTMD 1003) und eine Transparenz von 95,4 %. Diese Folie besteht aus einem PLA-Dreischichtaufbau, mit heißsiegelfähigen PLA-Außenschichten und einem PLA-Kern.

Im Vergleich dazu wurde für die beispielhaft ausgewählte PE-Folie des Produkts "tesa ThermoCover" mit nur 20 µm Dicke ein Haze von 3,5 % ermittelt sowie eine Transmission von 94,0 %. Diese Folie ist eine reine LDPE-Blasfolie, wie sie auch typischerweise im Verpackungsbereich genutzt wird.

Wie durch die Messwerte angedeutet, leiden bei den typischerweise für solche Schrumpfanwendungen eingesetzten PE-Blasfolien deutlich wahrnehmbar Kontrast und Schärfe. Hierbei fallen insbesondere noch Schlierenbildung und wolkige Strukturen auf, bedingt durch ungleichmäßige Abkühlung und sich daraus ergebenden Unterschieden in der Kristallinität. Es ist also im Allgemeinen vorteilhaft eine biaxial verstreckte Folie zu verwenden.

Das Verfahren zur Messung des Haze-Wertes wird in der Norm ASTM D 1003 beschrieben. Die Norm erfordert die Messung von vier Spektren. Für jedes Spektrum wird der Lichttransmissionsgrad berechnet. Die vier Transmissionsgrade werden zum prozentualen Haze-Wert verrechnet. Der Haze-Wert wird mit einem Haze-gard Dual von Byk-Gardner GmbH gemessen.

Mit der Transparenz beziehungsweise dem Transmissionsgrad - bisweilen auch nur kurz als Transmission bezeichnet -, der in der Regel in % angegeben wird, ist das Verhältnis der auf der Rückseite eines mit Licht durchstrahlten Körpers ankommenden Lichtleistung zu der auf der Vorderseite eintreffenden Lichtleistung gemeint. Die Transmission wird beschnitten durch Reflektion und Absorption.
Es gilt also: Transmissionsgrad = (1 - Reflektionsgrad) x (1 -Absorptionsgrad).

Die mechanischen Eigenschaften von PLA können eingestellt werden durch Zusatz von Weichmachern oder durch Variationen des Herstellungsverfahrens oder der Materialzusammensetzung. PLA ist ohne besondere Maßnahmen in seinen mechanischen Eigenschaften PS und PET viel näher als PE.
So weisen die erfindungsgemäßen PLA-Folien vorzugsweise einen Zugmodul größer 500 MPa auf. Die typischen Zugmodule für die erfindungsgemäßen PLA-Folien liegen im Bereich um 3000 MPa, gleiches gilt für PET.
Die PLA-Folie "Nativia NTSS" in 25 µm Dicke hat einen Zugmodul von 3300 MPa in md und 4000 MPa in cd, und eine maximale Zugkraft von 100 N/mm² in md und 200 N/mm² in cd, und eine Reißdehnung von über 100 %.
Hingegen liegen die Zugmodule für LDPE-Folien im Bereich von 200 bis 500 MPa.

Die Messung der Zugmodule erfolgt gemäß der DIN EN ISO 527-1/-2/-3.

Der für die vorliegende Anwendung relevante Wert ist die Schrumpfneigung bei der Zieltemperatur von 75° C.

Eine DSC-Messung von "Nativia NTSS" zeigt eine Glasübergangstemperatur bei 59 °C. Weder die Temperatur bei der die verstreckte Folie in der Herstellung abschließend getempert wird (ca. 110 °C), noch die Schmelztemperatur (153 °C) werden bei der Zieltemperatur von 75 °C erreicht. Hingegen werden dabei die Glasübergangstemperatur sehr wohl erreicht sowie der Bereich der Strecktemperaturen. Hier wird auch das Einsetzen des Schrumpfes beobachtet. Auch im Allgemeinen liegen die Werte für die Glasübergangstemperatur von PLA bei 60 bis 70 °C.
Es nicht offensichtlich, dass eine signifikante Schrumpfung von verstreckten PLA-Folien mit einem Haushaltsfön erreicht werden kann, da meist die Tempertemperatur nach der Verstreckung (ca. 110 °C bei PLA) als diejenige Temperatur angenommen wird, bis zu der eine solche Folie dimensionsstabil ist.

Hingegen liegt bei PET die Glasübergangstemperatur typischerweise bei ca. 75 bis 85 °C und die Streck- und Tempertemperaturen liegen noch deutlich darüber. Bei handelsüblichen biaxial verstreckten PET-Folien wird auch in der Praxis bei 75 °C kein signifikanter Schrumpf beobachtet.

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist.

Die Folie "Nativia NTSS" zeigt beispielsweise einen Schrumpfungsgrad von 3 % in MD bei 75 °C, und kann mit einem Haushaltsfön problemlos bei Anbringung vor einem Fenster am Fensterrahmen glatt gespannt werden. Eine kurze Rechnung kann die Größenordnung des benötigten Schrumpfgrades abschätzen. Bei der Annahme einer zylinderförmigen Wölbung einer 1 m x 1 m großen Fläche mit einer Wölbungshöhe von 5 cm ist eine Flächenschrumpfung von unter 1 % nötig um eine planare Form anzunehmen.

Die erfindungsgemäßen PLA-Folien haben ohne weitere Oberflächenbehandlung eine Oberflächenenergie von 38 mN/m, PE-Folien liegen bei ca. 30 mN/m. Eine höhere Oberflächenenergie ist sowohl für eine Beschichtung als auch für eine Verklebung der Folie mit Haftklebebändern am Fensterrahmen wünschenswert.

Zusammenfassend stellt man fest, dass PLA-Folien vorteilhaft viele nützliche Eigenschaften von PE und PET vereinen. Besonders beim visuellen Vergleich der optischen Eigenschaften von verstreckten PLA-Folien und PE-Blasfolien in der Anwendung vor einem Fenster ist die Überlegenheit der PLA-Folie gegenüber der PE-Folie sofort und eindrucksvoll nachvollziehbar. Die mechanischen Eigenschaften der genannten beispielhaften Folien sind auch nach Spannen durch Schrumpfen deutlich verschieden, die PLA-Folie hat im Gegensatz zur PE-Folie eine ausgezeichnete haptische Anmutung. Im Gegensatz zu den genannten beispielhaften Folien lässt sich eine verstreckte PET-Folie in dieser Anwendung nicht mit akzeptablem Aufwand durch Schrumpfen spannen und glätten.

PLA-Folien sind also besonders geeignet, um als Schrumpffolien in der Anwendung vor einem Fenster eingesetzt zu werden, da sie hochwertige optische, mechanische und oberflächliche Eigenschaften verbinden, die in dieser Kombination weder von PE noch von PET erfüllt werden können. Zudem können sie aufgrund ihrer Stabilität auch schwimmend verlegt werden.

PLA und PLA-Folien werden als bioabbaubare Substanzen eingestuft. Dennoch wird PLA bei der Verwendung vor einem Fenster nicht unter Zimmerbedingungen an Luft biologisch abgebaut und ist ausreichend UV-stabil.

Zu den beschriebenen Anwendungen lassen sich auch andere biobasierte und/oder bioabbaubare (Polyester-)Folien einsetzen (zum Beispiel bestehend aus Polyhydroxybuttersäure oder bioabbaubaren Polyethylenterephtalaten oder anderen Polyestern).

Im Folgenden wird das erfindungsgemäße Klebeband anhand von Beispielen näher erläutert, ohne die Erfindung damit in irgendeiner Art und Weise einschränken zu wollen.

### Beispiel 1

Mit doppelseitigem Klebeband werden eine PLA-Folie Nativia NTSS der Firma Taghleef mit einer Dicke von 25 µm und eine PE-Folie mit einer Dicke von 20 µm (tesa ThermoCover) an zwei Fenstern am Fensterrahmen befestigt. Durch Schrumpfen mit einem Haushaltsfön werden die Folien gespannt. Im Vergleich wird eine optische Beeinträchtigung durch die PE-Folie wahrgenommen, die PLA-Folie wirkt hingegen glasklar. Die optische Bewertung der PLA-Folie ist insgesamt besser.

### Beispiel 2

Nach Anbringung und Spannen wirkt die PE-Folie weich und biegsam und dehnt sich lokal bei Beanspruchung. So führt Druck mit einem Finger auf die PE-Folie zu sichtbaren Verformungen. Die PLA-Folie ist sehr robust, und verformt nicht so leicht bei solchen Beanspruchungen. Die haptische Bewertung der PLA-Folie ist insgesamt besser.

### Beispiel 3

Bei der Befestigung von PE-Folien mit doppelseitigem Klebeband treten nach dem Spannen durch Schrumpfen manchmal Ablösungen der Folie vom Klebeband auf. Dies kann zwar durch festes Andrücken und Erwärmen reduziert werden, erhöht jedoch den Aufwand und schadet dem Gesamteindruck des Produkts. Bei PLA-Folien treten solche Ablösungen nahezu nicht auf, da die Oberflächenenergie höher ist.

### Beispiel 4

Zum Vergleich wird eine biaxial verstreckte PET-Folie mit einer Dicke von 20 µm angebracht, und es wird versucht diese mit einem Haushaltsfön zu schrumpfen und spannen. Dies gelingt nicht, auch bei längerer Einwirkzeit. Erst bei Einsatz einer technischen Heißluftpistole eingestellt auf 150 °C kann die PET-Folie geschrumpft und dadurch gespannt werden.

## Patentansprüche

1. Verwendung einer Schrumpffolie aus Polymilchsäure zur Herstellung einer thermischen Isolierung, wobei die Schrumpffolie so vor einer Trennschicht aufgebracht ist, dass sich zwischen Trennschicht und Schrumpffolie eine thermisch isolierende Schicht befindet, wobei die Schrumpffolie auf einem Rahmen, der ein Fenster einfasst, aufgebracht wird.

2. Verwendung nach ein Anspruch 1,
**dadurch gekennzeichnet, dass**
die Schrumpffolie auf dem Rahmen, der ein Fenster einfasst, verklebt ist.

3. Verwendung nach ein Anspruch 1,
**dadurch gekennzeichnet, dass**
die Schrumpffolie direkt auf der Trennschicht aufgebracht ist, vorzugsweise schwimmend.

4. Verwendung nach zumindest einem der vorherigen Ansprüche,
**dadurch gekennzeichnet, dass**
der Polymilchsäureanteil in der Schrumpffolie größer oder gleich 30 Gew.-%, vorzugsweise zwischen 50 und 100 Gew.-%, besonders bevorzugt zwischen 65 bis 99,9 Gew.-% und ganz besonders bevorzugt zwischen 80 und 99,9 Gew.-% ist, insbesondere ganz besonders bevorzugt bei 100 Gew.-%.

5. Verwendung nach zumindest einem der vorherigen Ansprüche,
**dadurch gekennzeichnet, dass**
die Dicke der Schrumpffolie zwischen 5 bis 100 µm, vorzugsweise zwischen 15 bis 30 µm liegt.

6. Verwendung nach zumindest einem der vorherigen Ansprüche,
**dadurch gekennzeichnet, dass**
die Klebemasse eine lösemittelbasierte oder lösemittelfreie Selbstklebemasse ist, vorzugsweise basierend auf Naturkautschuk, Polyacrylaten, Styrolblockcopolymeren, Ethylenvinylacetat, Polyurethan, Poly-alpha-olefinen, Polyisobutylen, Styrol-Butadien-Kautschuk, vorzugsweise eine biologisch abbaubare Selbstklebemasse wie eine Polyester- oder Polyurethanhaftklebemasse.

7. Verwendung nach zumindest einem der vorherigen Ansprüche,
**dadurch gekennzeichnet, dass**
die Schrumpffolie einen Schrumpf von mindestens 1 % bei Behandlung mit einem Luftstrahl von 75 °C aufweist.

8. Verwendung nach zumindest einem der vorherigen Ansprüche,
**dadurch gekennzeichnet, dass**
die Schrumpffolie die folgenden Eigenschaften aufweist:
Zugmodul von größer 500 MPa,
Transmission größer als 90 % und/oder
Haze kleiner 4 %

9. Verwendung nach zumindest einem der vorherigen Ansprüche,
**dadurch gekennzeichnet, dass**
die Schrumpffolie eine Blasfolie oder mono- oder biaxial verstreckt ist.

10. Verwendung nach zumindest einem der vorherigen Ansprüche,
**dadurch gekennzeichnet, dass**
die Schrumpffolie eine energiesteuernde Beschichtung aufweist, vorzugsweise mit "low-e"-Funktionalität, elektrochromen, photochromen und/oder thermochromen Eigenschaften, besonders vorzugweise energieabsorbierend oder -reflektierend.

11. Verwendung nach zumindest einem der vorherigen Ansprüche,
**dadurch gekennzeichnet, dass**
eine energiesteuernde Beschichtung aus einer metallenen Schicht, leitenden Polymeren oder leitenden oder halb-leitenden Oxiden besteht.

12. Verwendung nach zumindest einem der vorherigen Ansprüche,
**dadurch gekennzeichnet, dass**
die Schrumpffolie abgemischt ist Materialien, so dass die Folie energiesteuernde Eigenschaften aufweist, vorzugsweise elektrochrome, photochrome und/oder thermochrome Eigenschaften, besonders vorzugweise energieabsorbierend oder -reflektierend.

## Claims

1. Use of a shrink film made of polylactic acid to produce a thermal insulation system, where the shrink film has been applied in front of a separating layer in a manner such that there is a thermally insulating layer between separating layer and shrink film, where the shrink film is applied on a frame that surrounds a window.

2. Use according to Claim 1,
**characterized in that**
the shrink film has been adhesive-bonded on the frame that surrounds a window.

3. Use according to Claim 1,
**characterized in that**
the shrink film has been applied directly on the separating layer, preferably via moistening of the separating layer and/or of the film.

4. Use according to at least one of the preceding claims,
**characterized in that**
the polylactic acid content in the shrink film is greater than or equal to 30% by weight, preferably from 50 to 100% by weight, particularly preferably from 65 to 99.9% by weight and very particularly preferably from 80 to 99.9% by weight, in particular very particularly preferably 100% by weight.

5. Use according to at least one of the preceding claims,
**characterized in that**
the thickness of the shrink film is from 5 to 100 µm, preferably from 15 to 30 µm.

6. Use according to at least one of the preceding claims,
**characterized in that**
the adhesive is a solvent-based or solvent-free self-adhesive, preferably based on natural rubber, on polyacrylates, on styrene block copolymers, on ethylene-vinyl acetate, on polyurethane, on poly-alpha-olefins, on polyisobutylene, on styrenebutadiene rubber, and is preferably a biodegradable self-adhesive, for example a pressure-sensitive polyester adhesive or pressure-sensitive polyurethane adhesive.

7. Use according to at least one of the preceding claims,
**characterized in that**
the shrinkage of the shrink film on treatment with a current of air which has a temperature of 75°C is at least 1%.

8. Use according to at least one of the preceding claims,
**characterized in that**
the shrink film has the following properties:
tensile modulus greater than 500 MPa,
transmittance greater than 90% and/or
haze less than 4%.

9. Use according to at least one of the preceding claims,
**characterized in that**
the shrink film is a blown film or has been mono-or biaxially oriented.

10. Use according to at least one of the preceding claims,
**characterized in that**
the shrink film has an energy-controlling coating, preferably with "low-e" functionality, electrochromic, photochromic and/or thermochromic properties, particularly preferably energy-absorbing or -reflecting.

11. Use according to at least one of the preceding claims,
**characterized in that**
an energy-controlling coating is composed of a metallic layer, of conductive polymers or of conductive or semiconductive oxides.

12. Use according to at least one of the preceding claims,
**characterized in that**
the shrink film has been blended with materials so that the film has energy-controlling properties, preferably electrochromic, photochromic and/or thermochromic properties, particularly preferably energy-absorbing or -reflecting.

## Revendications

1. Utilisation d'un film rétractable en poly(acide lactique) pour la fabrication d'une isolation thermique, le film rétractable étant appliqué devant une couche de séparation de manière telle qu'une couche thermiquement isolante se trouve entre la couche de séparation et le film rétractable, le film rétractable étant appliqué sur un châssis, qui comprend une fenêtre.

2. Utilisation selon la revendication 1, **caractérisée en ce que** le film rétractable est collé sur le châssis qui comprend une fenêtre.

3. Utilisation selon la revendication 1, **caractérisée en ce que** le film rétractable est appliqué directement sur la couche de séparation, de préférence de manière flottante.

4. Utilisation selon au moins l'une quelconque des revendications précédentes, **caractérisée en ce que** la proportion de poly(acide lactique) dans la feuille rétractable est supérieure ou égale à 30% en poids, de préférence entre 50 et 100% en poids, de manière particulièrement préférée entre 65 et 99,9% en poids et de manière tout particulièrement préférée entre 80 et 99,9% en poids, en particulier de manière tout particulièrement préférée de 100% en poids.

5. Utilisation selon au moins l'une quelconque des revendications précédentes, **caractérisée en ce que** l'épaisseur de la feuille rétractable est située entre 5 et 100 µm, de préférence entre 15 et 30 µm.

6. Utilisation selon au moins l'une quelconque des revendications précédentes, **caractérisée en ce que** la masse adhésive est une masse autoadhésive à base d'un solvant ou sans solvant, de préférence à base de caoutchouc naturel, de polyacrylates, de copolymères séquencés de styrène, d'éthylène-acétate de vinyle, de polyuréthane, de poly-alpha-oléfines, de polyisobutylène, de caoutchouc de styrène-butadiène, de préférence une masse autoadhésive biodégradable, telle qu'une masse autoadhésive à base de polyester ou de polyuréthane.

7. Utilisation selon au moins l'une quelconque des revendications précédentes, **caractérisée en ce que** la feuille rétractable présente un retrait d'au moins 1% lors du traitement par un jet d'air de 75°C.

8. Utilisation selon au moins l'une quelconque des revendications précédentes, **caractérisée en ce que** la feuille rétractable présente les propriétés suivantes :
module de traction supérieur à 500 MPa,
transmission supérieure à 90% et/ou
voile inférieur à 4%.

9. Utilisation selon au moins l'une quelconque des revendications précédentes, **caractérisée en ce que** la feuille rétractable est une feuille soufflée ou étirée de manière monoaxiale ou biaxiale.

10. Utilisation selon au moins l'une quelconque des revendications précédentes, **caractérisée en ce que** la feuille rétractable présente un revêtement régulant l'énergie, présentant de préférence une fonctionnalité "low-e", des propriétés électrochromes, photochromes et/ou thermochromes et, de manière particulièrement préférée, absorbe ou réfléchit l'énergie.

11. Utilisation selon au moins l'une quelconque des revendications précédentes, **caractérisée en ce qu'**un revêtement régulant l'énergie est constitué par une couche métallique, des polymères conducteurs ou des oxydes conducteurs ou semi-conducteurs.

12. Utilisation selon au moins l'une quelconque des revendications précédentes, **caractérisée en ce que** la feuille rétractable est mélangée avec des matériaux de manière telle que la feuille présente des propriétés de régulation de l'énergie, de préférence des propriétés électrochromes, photochromes et/ou thermochromes et, de manière particulièrement préférée, absorbe ou réfléchit l'énergie.
